# EUROPEAN PATENT APPLICATION

(11) **EP 4 629 601 A1**
(43) Date of publication of application: **08.10.2025**
(21) Application number: 23909788.4
(22) Date of filing: 21.11.2023
(51) Int. Cl.: H04L 67/5682

(54) **NETWORK DATA PROCESSING METHOD AND PROCESSING APPARATUS**

(30) Priority: 30.12.2022 CN 202211733814
(71) Applicant: Huawei Technologies Co., Ltd., Shenzhen, Guangdong 518129 (CN)
(72) Inventor: HUANG, Yachao, Shenzhen, Guangdong 518129 (CN); SONG, Jun, Shenzhen, Guangdong 518129 (CN); LI, Jiaxing, Shenzhen, Guangdong 518129 (CN); DING, Hui, Shenzhen, Guangdong 518129 (CN)
(74) Representative: Thun, Clemens
(86) International application number: PCT/CN2023/133047
(87) International publication number: WO 2024/139856

(57) **Abstract**

This application provides a network data processing method and processing apparatus, to help improve network data processing efficiency, reduce operation costs, and improve user experience. The method is applied to a system including a first node and a plurality of second nodes, where the first node stores routing data of the plurality of second nodes, the plurality of second nodes store network data, and the method includes: The first node receives a first request message, where the first request message is used to request to perform an addition operation, a deletion operation, a modification operation, or a query operation on target network data; the first node determines a target node from the plurality of second nodes based on the first request message, where the target node is a storage node corresponding to the target network data; the first node sends a second request message to the target node based on the routing data, where the second request message is used to request to perform the operation in the first request message on the target network data; and the first node receives a response message from the target node.

## Description

This application claims priority to Chinese Patent Application No. 202211733814.7, filed with the China National Intellectual Property Administration on December 30, 2022 and entitled "NETWORK DATA PROCESSING METHOD AND PROCESSING APPARATUS", which is incorporated herein by reference in its entirety.

### TECHNICAL FIELD

This application relates to the field of communication technologies, and in particular, to a network data processing method and processing apparatus.

### BACKGROUND

A data network element defined in a 5th generation (5th generation, 5G) mobile communication technology uses an architecture in which a signaling access node, a service processing node, and a network data persistence storage node are separated. The data network element may include a policy control function (policy control function, PCF), a unified data management (unified data management, UDM), a network exposure function (network exposure function, NEF), a unified data repository (unified data repository, UDR), and the like. The PCF, the UDM, and the NEF are front-end network elements, and can serve as signaling access nodes or service processing nodes. The UDR is a back-end network element, and can serve as a network data persistence storage node. The front-end network element and the back-end network element are designed separately, and the front-end network element accesses network data stored in the back-end network element through an external interface. In the architecture, a same back-end network element (for example, the UDR) provides a data storage service, and is responsible for maintaining subscription data, policy data, structured shared data, and application data.

In actual deployment of the architecture, database and table sharding or distributed deployment of network data is usually performed on the network data persistence storage node based on a number segment, an internet protocol address, or a service address area (for example, a province or a city). In this deployment manner, originally properly planned network data storage may have a requirement on a larger capacity due to introduction of a new service. Because a capacity of a single network data persistence storage node has an upper limit, an operator needs to expand the capacity of the network data persistence storage node. In other words, when a network data scale increases, the operator needs to split the network data persistence storage node. Consequently, network data processing efficiency is reduced, and user experience is poor.

### SUMMARY

This application provides a network data processing method and processing apparatus, to help improve network data processing efficiency, reduce operation costs, and improve user experience.

According to a first aspect, a network data processing method is provided. The method is applied to a system including a first node and a plurality of second nodes, where the first node stores routing data of the plurality of second nodes, the plurality of second nodes store network data, and the method includes: The first node receives a first request message, where the first request message is used to request to perform an addition operation, a deletion operation, a modification operation, or a query operation on target network data; the first node determines a target node from the plurality of second nodes based on the first request message, where the target node is a storage node corresponding to the target network data; the first node sends a second request message to the target node based on the routing data, where the second request message is used to request to perform the operation in the first request message on the target network data; the first node receives a response message from the target node; and the first node sends the response message to a third node or an accessed second node.

It should be understood that the accessed second node herein is a second node accessed by a service processing node. In other words, the service processing node needs to access data via the second node to process a service.

It should be further understood that the second request message may be the same as or different from the first request message.

In a possible implementation, when the first request message is a message for requesting to delete, modify, or query the network data, the second request message may be the same as the first request message.

In another possible implementation, the first request message is a message for requesting to add network data, the first request message carries an identifier of the target node and the target network data, the second request message carries the target network data, and the first request message and the second request message may be different.

In a possible implementation, the first node receives the response message from the target node. Correspondingly, the target node sends the response message to the first node. The first node sends the response message to the third node or the accessed second node. The target node may send the response message to the first node both when the operation in the second request message is successfully performed or fails to be performed, or may send the response message to the first node only when the operation in the second request message is successfully performed, and make no response when the operation in the second request message fails to be performed. This is not limited in this embodiment of this application.

In another possible implementation, the target node may directly send the response message to the third node or the accessed second node without using the first node. Similarly, the target node may send the response message to the third node or the accessed second node when the operation in the second request message is successfully performed or fails to be performed, or may send the response message to the third node or the accessed second node only when the operation in the second request message is successfully performed. To avoid repetition, details are not described herein again.

It should be further understood that when the first request message is from the third node, the first node sends the response message to the third node. When the first request message is from the accessed second node, the first node sends the response message to the accessed second node.

According to the network data processing method in this embodiment of this application, the first node determines the target node based on the first request message, and sends, to the target node, the message that is of the operation on the target network data and that is in the first request message. Because the first node in this embodiment of this application stores the routing data of the plurality of second nodes, unified management of network data in the plurality of second nodes can be implemented by using the first node. This helps improve network data processing efficiency, reduce operation costs, and improve user experience.

With reference to the first aspect, in some implementations of the first aspect, the system further includes the third node, the third node is configured to manage the network data, and the first request message is from the third node.

With reference to the first aspect, in some implementations of the first aspect, the first request message is used to request to perform the addition operation on the target network data, and the first request message carries the identifier of the target node and the target network data. After the first node receives the response message from the target node, the network data processing method further includes: The first node stores a first correspondence, where the first correspondence indicates a correspondence between the identifier of the target node and an identifier of the target network data.

It should be understood that the first node determines the target node based on the identifier that is of the target node and that is carried in the first request message.

It should be further understood that the response message may indicate that the operation that is of adding the target network data and that is in the second request message is successfully performed or fails to be performed, or may indicate that the operation that is of adding the target network data and that is in the second request message is successfully performed. In other words, the target node may send the response message to the first node when the target network data is successfully added or fails to be added, or may send the response message only when the target network data is successfully added. The first node stores the first correspondence based on the response message, and the response message is sent by the target node to the first node when the target node successfully adds the target network data.

In a possible implementation, the target node may send the response message to the first node, and then the first node sends the response message to the third node. In another possible implementation, the target node may directly send the response message to the third node without using the first node. To avoid repetition, details are not described herein again.

In this embodiment of this application, the target node may send the response message to the first node, and the first node stores the first correspondence based on the response message. This helps improve convenience of network data query, and improve user experience.

According to the network data processing method in this embodiment of this application, the first node determines the target node based on the first request message, and sends, to the target node, the message that is for performing the addition operation on the target network data and that is in the first request message. Because the first node in this embodiment of this application stores the routing data of the plurality of second nodes, addition management of network data in the plurality of second nodes can be implemented by using the first node. This helps improve network data addition efficiency, reduce operation costs, and improve user experience.

With reference to the first aspect, in some implementations of the first aspect, the first request message is used to request to perform the deletion operation on the target network data, and the first request message carries an identifier of the target network data. After the first node receives the response message from the target node, the network data processing method further includes: The first node deletes a first correspondence, where the first correspondence indicates a correspondence between an identifier of the target node and the identifier of the target network data.

It should be understood that the first node determines the target node based on the identifier that is of the target network data and that is carried in the first request message and the first correspondence. The target node deletes the target network data based on the identifier that is of the target network data and that is carried in the second request message.

It should be further understood that the first node deletes the first correspondence based on the response message, and the response message is sent by the target node to the first node when the target node successfully deletes the target network data.

In a possible implementation, the target node may send the response message to the first node, and then the first node sends the response message to the third node. In another possible implementation, the target node may directly send the response message to the third node without using the first node. To avoid repetition, details are not described herein again.

In this embodiment of this application, the target node may send the response message to the first node, and the first node deletes the first correspondence based on the response message. This helps improve network data query accuracy, and improve user experience.

According to the network data processing method in this embodiment of this application, the first node determines the target node based on the first request message, and sends, to the target node, the message that is for performing the deletion operation on the target network data and that is in the first request message. Because the first node in this embodiment of this application stores the routing data of the plurality of second nodes, deletion management of the network data in the plurality of second nodes can be implemented by using the first node. This helps improve network data deletion efficiency, reduce operation costs, and improve user experience.

With reference to the first aspect, in some implementations of the first aspect, the first request message is used to request to perform the modification operation on the target network data, and the first request message carries an identifier of the target network data and modified target network data.

It should be understood that the first node determines the target node based on the identifier that is of the target network data and that is carried in the first request message and the first correspondence. The target node modifies the target network data based on the identifier that is of the target network data and that is carried in the second request message and the modified target network data.

According to the network data processing method in this embodiment of this application, the first node determines the target node based on the first request message, and sends, to the target node, the message that is for performing the modification operation on the target network data and that is in the first request message. Because the first node in this embodiment of this application stores the routing data of the plurality of second nodes, modification management of network data in the plurality of second nodes can be implemented by using the first node. This helps improve network data modification efficiency, reduce operation costs, and improve user experience.

With reference to the first aspect, in some implementations of the first aspect, the first request message is from one accessed second node in the plurality of second nodes, the first request message is used to request to perform the query operation on the target network data, the first request message carries an identifier of the target network data, and the response message carries the target network data.

It should be understood that the first node determines the target node based on the identifier that is of the target network data and that is carried in the first request message and the first correspondence. The target node queries the target network data based on the identifier that is of the target network data and that is carried in the second request message.

In a possible implementation, the target node may send the response message to the first node, and then the first node sends the response message to the accessed second node. In another possible implementation, the target node may directly send the response message to the accessed second node without using the first node. To avoid repetition, details are not described herein again.

According to the network data processing method in this embodiment of this application, because the first node stores the routing data of the plurality of second nodes, the first node may determine the target node in which the target network data is located, and query the target network data. This helps improve network data query efficiency and reduce operation costs. In addition, when the accessed second node has no target network data, the first node can query the target network data in the target node, to implement network data sharing between the plurality of second nodes, and improve user experience.

With reference to the first aspect, in some implementations of the first aspect, the first node further stores the network data. Before the first node determines the target node from the plurality of second nodes based on the first request message, the network data processing method further includes: The first node determines, based on the identifier of the target network data, whether the first node locally stores the target network data; and that the first node determines the target node from the plurality of second nodes based on the first request message includes: When the first node does not locally store the target network data, the first node determines the target node from the plurality of second nodes based on the first request message.

In this embodiment of this application, before determining the target node, the first node determines whether the target network data is locally stored. If the target network data is locally stored, the first node may directly send the target network data to the accessed second node. If the target network data is not locally stored, the first node may determine the target node, and obtain, from the target node, the target network data needed by the accessed second node. This helps improve processing efficiency of a network device.

With reference to the first aspect, in some implementations of the first aspect, the system further includes the third node, and the third node is configured to manage the network data. Before the first node receives the first request message, the network data processing method further includes: The first node receives configuration information from the third node, where the configuration information carries the routing data of the plurality of second nodes.

With reference to the first aspect, in some implementations of the first aspect, before the first node receives the first request message, the network data processing method further includes: The first node receives dynamic registration information from all or a part of the plurality of second nodes, where the dynamic registration information carries routing data of all or the part of the second nodes.

It should be understood that the first node receives the dynamic registration information from all or the part of the plurality of second nodes, and correspondingly, all or the part of the second nodes send the dynamic registration information to the first node. The all of the plurality of second nodes may send the dynamic registration information to the first node; or the part of the second nodes may send the dynamic registration information to the first node, and routing information of a remaining second node may be from the configuration information of the third node. This is not limited in this embodiment of this application. If all the second nodes send the dynamic registration information, the third node may not need to send the configuration information to the first node, thereby reducing signaling overheads of the third node. In addition, the second node performs dynamic registration, so that accuracy of the registration information can be ensured.

According to a second aspect, a network data processing method is provided. The method is applied to a system including a first node and a plurality of second nodes, where the first node stores routing data of the plurality of second nodes, the plurality of second nodes store network data, and the method includes: A target node in the plurality of second nodes receives a second request message from the first node, where the second request message is used to request to perform an addition operation, a deletion operation, a modification operation, or a query operation on target network data; the target node performs the operation in the second request message on the target network data based on the second request message; the target node sends a response message to the first node; and the first node sends the response message to a third node or an accessed second node.

In a possible implementation, the target node may directly send the response message to the third node or the accessed second node without using the first node. To avoid repetition, details are not described herein again.

With reference to the second aspect, in some implementations of the second aspect, the second request message is used to request to perform the addition operation on the target network data, and the second request message carries the target network data.

With reference to the second aspect, in some implementations of the second aspect, the second request message is used to request to perform the deletion operation on the target network data, and the second request message carries an identifier of the target network data.

With reference to the second aspect, in some implementations of the second aspect, the second request message is used to request to perform the modification operation on the target network data, and the second request message carries an identifier of the target network data and modified target network data.

With reference to the second aspect, in some implementations of the second aspect, the second request message is used to request to perform the query operation on the target network data, the second request message carries an identifier of the target network data, and the response message carries the target network data.

According to a third aspect, a network data processing method is provided. The method is applied to a system including a first node and a plurality of second nodes, where the first node stores routing data of the plurality of second nodes, the plurality of second nodes store network data, and the method includes: An accessed node in the plurality of second nodes receives a third request message from a service processing node, where the third request message is used to request to perform an addition operation, a deletion operation, a modification operation, or a query operation on target network data; the accessed node determines, based on the third request message, whether the accessed node locally stores the target network data; and when the accessed node does not locally store the target network data, the accessed node sends a first request message to the first node, where the first request message is used to request to perform the operation in the third request message on the target network data.

With reference to the third aspect, in some implementations of the third aspect, the third request message is used to request to perform the addition operation on the target network data, and the third request message carries the target network data.

With reference to the third aspect, in some implementations of the third aspect, the third request message is used to request to perform the deletion operation on the target network data, and the third request message carries an identifier of the target network data.

With reference to the third aspect, in some implementations of the third aspect, the third request message is used to request to perform the modification operation on the target network data, and the third request message carries an identifier of the target network data and modified target network data.

With reference to the third aspect, in some implementations of the third aspect, the third request message is used to request to perform the query operation on the target network data, and the third request message carries an identifier of the target network data.

According to a fourth aspect, a network data processing apparatus is provided. The apparatus is configured to perform the method in any possible implementation of the foregoing aspects. Specifically, the network data processing apparatus includes a module configured to perform the method in any possible implementation of the foregoing aspects.

In a design, the network data processing apparatus may include modules that are in one-to-one correspondence with the methods/operations/steps/actions described in the foregoing aspects. The modules may be implemented by a hardware circuit, software, or a combination of the hardware circuit and the software.

In another design, the network data processing apparatus is a communication chip. The communication chip may include an input circuit or interface configured to send a message or data, and an output circuit or interface configured to receive information or data.

In another design, the network data processing apparatus may be a communication device. The communication device may include a transmitter configured to send a message or data, and a receiver configured to receive information or data.

According to a fifth aspect, another network data processing apparatus is provided. The apparatus includes a processor and a memory. The processor is configured to: read instructions stored in the memory, receive a signal through a receiver, and transmit a signal through a transmitter, to perform the method in any possible implementation of the foregoing aspects.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The network data processing apparatus in the fifth aspect may be a chip. The processor may be implemented by hardware or software. When the processor is implemented by hardware, the processor may be a logic circuit, an integrated circuit, or the like. When the processor is implemented by software, the processor may be a general-purpose processor, and may be implemented by reading software code stored in the memory. The memory may be integrated into the processor, or may be located outside the processor and exist independently.

According to a sixth aspect, a computer program product is provided. The computer program product includes a computer program (which may also be referred to as code or instructions). When the computer program is run, a computer is enabled to perform the method in any possible implementation of the foregoing aspects.

According to a seventh aspect, a computer-readable storage medium is provided. The computer-readable storage medium stores a computer program (which may also be referred to as code or instructions). When the computer program is run on a computer, the computer is enabled to perform the method in any possible implementation of the foregoing aspects.

### BRIEF DESCRIPTION OF DRAWINGS

FIG. 1 is a diagram of an application scenario according to an embodiment of this application;
FIG. 2 is a diagram of another application scenario according to an embodiment of this application;
FIG. 3 is a schematic flowchart of a network data processing method according to an embodiment of this application;
FIG. 4 is a schematic flowchart of another network data processing method according to an embodiment of this application;
FIG. 5 is a schematic flowchart of another network data processing method according to an embodiment of this application;
FIG. 6 is a schematic flowchart of another network data processing method according to an embodiment of this application;
FIG. 7 is a schematic flowchart of another network data processing method according to an embodiment of this application;
FIG. 8 is a schematic flowchart of another network data processing method according to an embodiment of this application;
FIG. 9 is a block diagram of a network data processing apparatus according to an embodiment of this application; and
FIG. 10 is a block diagram of another network data processing apparatus according to an embodiment of this application.

### DESCRIPTION OF EMBODIMENTS

The following describes technical solutions of this application with reference to accompanying drawings.

To clearly describe the technical solutions in embodiments of this application, terms such as "first" and "second" are used in embodiments of this application to distinguish between same items or similar items that have basically same functions or purposes. A person skilled in the art may understand that the terms such as "first" and "second" do not limit a quantity or an execution sequence, and the terms such as "first" and "second" do not indicate a definite difference.

It should be noted that, in this application, terms such as "example" or "for example" represents giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

**In** addition, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, and c may represent a, b, c, a and b, a and c, b and c, or a, b, and c, where a, b, and c may be singular, or may be plural.

A data network element defined in a 5th generation mobile communication technology (5th generation mobile communication technology, 5G) uses an architecture in which a signaling access node, a service processing node, and a network data persistence storage node are separated. The data network element may include a policy control function (policy control function, PCF), a unified data management (unified data management, UDM), a network exposure function (network exposure function, NEF), a unified data repository (unified data repository, UDR), and the like. The PCF, the UDM, and the NEF are front-end network elements, and can serve as signaling access nodes or service processing nodes. The UDR is a back-end network element, and can serve as a network data persistence storage node. The front-end network element and the back-end network element are designed separately, and the front-end network element accesses network data stored in the back-end network element through an external interface. In the architecture, a same back-end network element (for example, the UDR) provides a data storage service, and is responsible for maintaining subscription data, policy data, structured shared data, and application data.

In actual deployment of the architecture, database and table sharding or distributed deployment of network data is usually performed on the network data persistence storage node based on a number segment, an internet protocol address, or a service address area (for example, a province or a city). However, in this deployment manner, originally properly planned network data storage may have a requirement on a larger capacity due to introduction of a new service. Because a capacity of a single network data persistence storage node has an upper limit, an operator needs to expand the capacity of the network data persistence storage node. In other words, when a network data scale increases, the operator needs to split the network data persistence storage node. On the one hand, after the network data persistence storage node is split, a plurality of business operation support systems (business operation support systems, BOSSes) serving as management nodes are needed to add, delete, modify, and query the network data. Consequently, network data processing efficiency is reduced, operation costs are increased, and user experience is poor.

To resolve the foregoing problem, embodiments of this application provide a network data processing method and processing apparatus. An intermediate node is added between a management node and a network data persistence storage node, and the node forwards a message between nodes, so that unified management of network data in a plurality of network data persistence storage nodes can be implemented. This helps improve network data processing efficiency, reduce operation costs, and improve user experience.

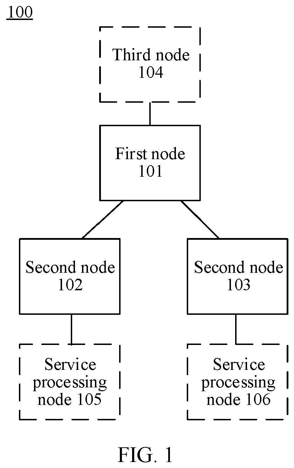

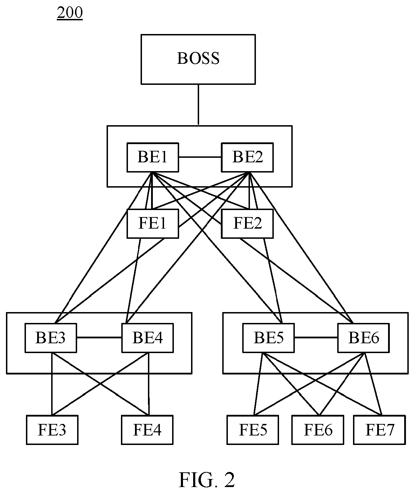

For ease of understanding of this application, the following describes application scenarios in embodiments of this application with reference to FIG. 1 and FIG. 2.

FIG. 1 is a diagram of an application scenario 100 according to an embodiment of this application. The application scenario 100 includes a first node 101, a second node 102, and a second node 103. The first node 101 (that is, the intermediate node) may be used as a routing node, and store routing data of the second nodes, and is configured to forward a message between the nodes. In addition, the first node 101 may be further used as a storage node of network data, and is configured to store the network data. The second node 102 and the second node 103 may be used as storage nodes of the network data, and are configured to store the network data.

Optionally, the application scenario 100 further includes a third node 104, a service processing node 105, and a service processing node 106. The third node 104 is connected to the first node 101, may be used as a management node, and is configured to manage the network data. The service processing node 105 is connected to the second node 102, and is configured to process a corresponding service via the second node 102. The service processing node 106 is connected to the second node 103, and is configured to process a corresponding service via the second node 103.

It should be understood that a quantity of second nodes in FIG. 1 is merely an example. In another scenario, a larger quantity of second nodes may be included. This is not limited in this embodiment of this application. In addition, a quantity of service processing nodes may be determined based on the quantity of the second nodes.

FIG. 2 is a diagram of another application scenario 200 according to an embodiment of this application. In FIG. 2, a back end (back end, BE) node may be used as a network data storage node or a routing node, and a front end (front end, FE) node may be used as a signaling access node or a service processing node. BE1 and BE2 may be used as routing nodes, and correspond to the first node 101 in the scenario 100. BE3 and BE4 may be used as network data storage nodes, and correspond to the second node 102 in the scenario 100. BE5 and BE6 may be used as network data storage nodes, and correspond to the second node 103 in the scenario 100. A BOSS may be a management node, and correspond to the third node 104 in the scenario 100. FE1, FE2, FE3, FE4, FE5, FE6, and FE7 may correspond to the service processing nodes in the scenario 100.

It should be understood that quantities of BEs and FEs in FIG. 2 are merely examples. In another scenario, larger quantities of BEs and FEs may be included. This is not limited in this embodiment of this application.

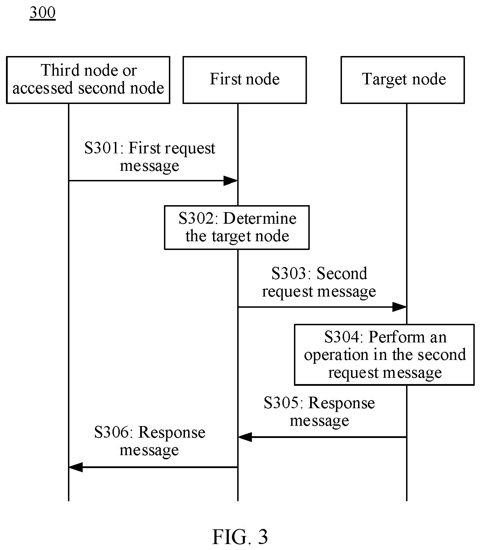

The following describes in detail the network data processing method in embodiments of this application with reference to FIG. 3 to FIG. 8.

FIG. 3 is a schematic flowchart of a network data processing method 300 according to an embodiment of this application. The method may be applied to the scenario 100 or the scenario 200, or may be applied to another scenario. This is not limited in this embodiment of this application. The method 300 includes the following steps.

S301: A third node or an accessed second node sends a first request message to a first node, where the first request message is used to request to perform an addition operation, a deletion operation, a modification operation, or a query operation on target network data. Correspondingly, the first node receives the first request message.

It should be understood that the accessed second node herein refers to a second node accessed by a service processing node, in other words, the service processing node needs to access data via the second node to process a service. The scenario 100 shown in FIG. 1 is used as an example. The service processing node 105 accesses data via the second node 102, in this case, the second node 102 is the accessed second node.

S302: The first node determines a target node from a plurality of second nodes based on the first request message, where the target node is a storage node corresponding to the target network data.

S303: The first node sends a second request message to the target node based on routing data of the plurality of second nodes, where the second request message is used to request to perform the operation in the first request message on the target network data. Correspondingly, the target node receives the second request message.

It should be understood that the second request message may be the same as or different from the first request message.

In a possible implementation, the first request message may be the same as the second request message in the following three cases.

Case 1: The first request message is a message for requesting to delete network data, the first request message carries an identifier of the target network data, and the second request message carries the identifier of the target network data.

Case 2: The first request message is a message for requesting to modify network data, the first request message carries an identifier of the target network data and modified target network data, and the second request message carries the identifier of the target network data and the modified target network data.

Case 3: The first request message is a message for requesting to query network data, the first request message carries an identifier of the target network data, and the second request message carries the identifier of the target network data.

In another possible implementation, the first request message is a message for requesting to add network data, the first request message carries an identifier of the target node and the target network data, the second request message carries the target network data, and the first request message and the second request message may be different.

S304: The target node performs the operation in the second request message.

S305: The target node sends a response message to the first node. Correspondingly, the first node receives the response message.

Optionally, the target node may send the response message to the first node when the operation in S304 is successfully performed or fails to be performed, or may send the response message to the first node only when the operation in S304 is successfully performed, and make no response when the operation in S304 fails to be performed. This is not limited in this embodiment of this application. The following describes two cases.

Case 1: The response message indicates that the operation in the second request message is successfully performed or fails to be performed.

For example, the response message may carry indication information. When the indication information is 0, it indicates that the operation in the second request message is successfully performed. When the indication information is 1, it indicates that the operation in the second request message fails to be performed. Alternatively, when the indication information is an acknowledgement (acknowledgement, ACK) message, it indicates that the operation in the second request message is successfully performed. When the indication information is a negative acknowledgement (negative acknowledgement, NACK) message, it indicates that the operation in the second request message fails to be performed.

Case 2: The response message indicates that the operation in the second request message is successfully performed.

It should be understood that the first node may start timing after sending the second request message. If receiving no response message from the target node within a preset time period, the first node considers that the operation in the second request message fails to be performed. If receiving the response message from the target node within a preset time period, the first node considers that the operation in the second request message is successfully performed.

S306: The first node sends the response message to the third node or the accessed second node. Correspondingly, the third node or the accessed second node receives the response message.

It should be understood that when the first request message is from the third node, the first node sends the response message to the third node. When the first request message is from the accessed second node, the first node sends the response message to the accessed second node.

It should be further understood that the first node sends the response message to the third node or the accessed second node. The response message may indicate that the operation in the second request message is successfully performed or fails to be performed, or may merely indicate that the operation in the second request message is successfully performed. To avoid repetition, details are not described herein again.

In a possible implementation, the first node is in redirection (redirect) mode, and the target node may directly send the response message to the third node or the accessed second node without using the first node. In another possible implementation, the first node is in proxy (proxy) mode, and may perform message forwarding between the target node and the third node or between the target node and the accessed second node. In other words, the target node may send the response message to the first node (that is, S305), and then the first node sends the response message to the third node or the accessed second node (that is, S306).

According to the network data processing method in this embodiment of this application, the first node determines the target node based on the first request message, and sends, to the target node, the message that is of the operation on the target network data and that is in the first request message. Because the first node in this embodiment of this application stores the routing data of the plurality of second nodes, unified management of network data in the plurality of second nodes can be implemented by using the first node. This helps improve network data processing efficiency, reduce operation costs, and improve user experience.

Optionally, the first request message is from the third node. The first request message is used to request to perform the addition operation on the target network data, and the first request message carries an identifier of the target node and the target network data. The method may specifically include: The third node sends the first request message to the first node, and correspondingly, the first node receives the first request message. The first node determines the target node based on the first request message. The first node sends the second request message to the target node, where the second request message is used to request to perform the addition operation on the target network data, and the second request message carries the target network data. Correspondingly, the target node receives the second request message. The target node stores the target network data based on the second request message. The target node sends the response message to the first node. Correspondingly, the first node receives the response message. The first node stores a first correspondence based on the response message, where the first correspondence indicates a correspondence between the identifier of the target node and an identifier of the target network data. The first node sends the response message to the third node. Correspondingly, the third node receives the response message.

Specifically, the first node determines the target node based on the identifier that is of the target node and that is carried in the first request message.

It should be understood that the response message may indicate that the operation that is of adding the target network data and that is in the second request message is successfully performed or fails to be performed, or may indicate that the operation that is of adding the target network data and that is in the second request message is successfully performed. In other words, the target node may send the response message to the first node when the target network data is successfully added or fails to be added, or may send the response message only when the target network data is successfully added. The first node stores the first correspondence based on the response message, and the response message is sent by the target node to the first node when the target node successfully adds the target network data.

In a possible implementation, the target node may send the response message to the first node, and then the first node sends the response message to the third node. In another possible implementation, the target node may directly send the response message to the third node without using the first node. To avoid repetition, details are not described herein again.

In this embodiment of this application, the target node may send the response message to the first node, and the first node stores the first correspondence based on the response message. This helps improve convenience of network data query, and improve user experience.

According to the network data processing method in this embodiment of this application, the first node determines the target node based on the first request message, and sends, to the target node, the message that is for performing the addition operation on the target network data and that is in the first request message. Because the first node in this embodiment of this application stores the routing data of the plurality of second nodes, addition management of network data in the plurality of second nodes can be implemented by using the first node. This helps improve network data addition efficiency, reduce operation costs, and improve user experience.

Optionally, the first request message is from the third node. The first request message is used to request to perform the deletion operation on the target network data, and the first request message carries an identifier of the target network data. The method may specifically include: The third node sends the first request message to the first node, and correspondingly, the first node receives the first request message. The first node determines the target node based on the first request message. The first node sends the second request message to the target node, where the second request message is used to request to perform the deletion operation on the target network data, and the second request message carries the identifier of the target network data. Correspondingly, the target node receives the second request message. The target node deletes the target network data based on the second request message. The target node sends the response message to the first node. Correspondingly, the first node receives the response message. The first node deletes a first correspondence based on the response message, where the first correspondence indicates a correspondence between an identifier of the target node and the identifier of the target network data. The first node sends the response message to the third node. Correspondingly, the third node receives the response message.

Specifically, the first node determines the target node based on the identifier that is of the target network data and that is carried in the first request message and the first correspondence. The target node deletes the target network data based on the identifier that is of the target network data and that is carried in the second request message.

It should be understood that the response message may indicate that the operation that is of deleting the target network data and that is in the second request message is successfully performed or fails to be performed, or may indicate that the operation that is of deleting the target network data and that is in the second request message is successfully performed. In other words, the target node may send the response message to the first node when the target network data is successfully deleted or fails to be deleted, or may send the response message only when the target network data is successfully deleted. The first node deletes the first correspondence based on the response message, and the response message is sent by the target node to the first node when the target node successfully deletes the target network data.

In a possible implementation, the target node may send the response message to the first node, and then the first node sends the response message to the third node. In another possible implementation, the target node may directly send the response message to the third node without using the first node. To avoid repetition, details are not described herein again.

In this embodiment of this application, the target node may send the response message to the first node, and the first node deletes the first correspondence based on the response message. This helps improve network data query accuracy, and improve user experience.

According to the network data processing method in this embodiment of this application, the first node determines the target node based on the first request message, and sends, to the target node, the message that is for performing the deletion operation on the target network data and that is in the first request message. Because the first node in this embodiment of this application stores the routing data of the plurality of second nodes, deletion management of network data in the plurality of second nodes can be implemented by using the first node. This helps improve network data deletion efficiency, reduce operation costs, and improve user experience.

Optionally, the first request message is from the third node. The first request message is used to request to perform the modification operation on the target network data, and the first request message carries an identifier of the target network data and modified target network data. The method may specifically include: The third node sends the first request message to the first node, and correspondingly, the first node receives the first request message. The first node determines the target node based on the first request message. The first node sends the second request message to the target node, where the second request message is used to request to perform the modification operation on the target network data, and the second request message carries the identifier of the target network data and the modified target network data. Correspondingly, the target node receives the second request message. The target node modifies the target network data based on the second request message. The target node sends the response message to the first node. Correspondingly, the first node receives the response message. The first node sends the response message to the third node. Correspondingly, the third node receives the response message.

Specifically, the first node determines the target node based on the identifier that is of the target network data and that is carried in the first request message and the first correspondence. The target node modifies the target network data based on the identifier that is of the target network data and that is carried in the second request message and the modified target network data.

It should be understood that the response message may indicate that the operation that is of modifying the target network data and that is in the second request message is successfully performed or fails to be performed, or may indicate that the operation that is of modifying the target network data and that is in the second request message is successfully performed. In other words, the target node may send the response message to the first node when the target network data is successfully modified or fails to be modified, or may send the response message only when the target network data is successfully modified. This is not limited in this embodiment of this application.

In a possible implementation, the target node may send the response message to the first node, and then the first node sends the response message to the third node. In another possible implementation, the target node may directly send the response message to the third node without using the first node. To avoid repetition, details are not described herein again.

According to the network data processing method in this embodiment of this application, the first node determines the target node based on the first request message, and sends, to the target node, the message that is for performing the modification operation on the target network data and that is in the first request message. Because the first node in this embodiment of this application stores the routing data of the plurality of second nodes, modification management of network data in the plurality of second nodes can be implemented by using the first node. This helps improve network data modification efficiency, reduce operation costs, and improve user experience.

Optionally, the first request message is from one accessed second node in the plurality of second nodes, the first request message is used to request to perform the query operation on the target network data, and the first request message carries an identifier of the target network data. The method may specifically include: The accessed second node sends the first request message to the first node, and correspondingly, the first node receives the first request message. The first node determines the target node based on the first request message. The first node sends the second request message to the target node, where the second request message is used to request to perform the query operation on the target network data, and the second request message carries the identifier of the target network data. Correspondingly, the target node receives the second request message. The target node queries the target network data based on the second request message. The target node sends the response message to the first node. Correspondingly, the first node receives the response message. The first node sends the response message to the accessed second node. Correspondingly, the accessed second node receives the response message.

Specifically, the first node determines the target node based on the identifier that is of the target network data and that is carried in the first request message and a first correspondence. The target node queries the target network data based on the identifier that is of the target network data and that is carried in the second request message.

It should be understood that the response message may indicate that the operation that is of querying the target network data and that is in the second request message is successfully performed or fails to be performed, or may indicate that the operation that is of querying the target network data and that is in the second request message is successfully performed. In other words, the target node may send the response message to the first node when the target network data is successfully queried or fails to be queried, or may send the response message only when the target network data is successfully queried. This is not limited in this embodiment of this application.

For example, the target node sends the response message to the first node when the target network data is successfully queried or fails to be queried. When the operation that is of querying the target network data and that is in the second request message is successfully performed, the response message may carry the target network data. When the operation that is of querying the target network data and that is in the second request message fails to be performed, the response message may carry an indication message 0 or a NACK, indicating that the operation in the second request message fails to be performed.

In a possible implementation, the target node may send the response message to the first node, and then the first node sends the response message to the accessed second node. In another possible implementation, the target node may directly send the response message to the accessed second node without using the first node. To avoid repetition, details are not described herein again.

According to the network data processing method in this embodiment of this application, because the first node stores the routing data of the plurality of second nodes, the first node may determine the target node in which the target network data is located, and query the target network data. This helps improve network data query efficiency and reduce operation costs. In addition, when the accessed second node has no target network data, the first node can query the target network data in the target node, to implement network data sharing between the plurality of second nodes, and improve user experience.

Optionally, the first node further stores the network data. The method may specifically include: The third node or the accessed second node sends the first request message to the first node, where the first request message is used to request to perform the query operation on the target network data, and the first request message carries the identifier of the target network data. Correspondingly, the first node receives the first request message. The first node determines, based on the identifier that is of the target network data and that is carried in the first request message, whether the first node locally stores the target network data. When the first node does not locally store the target network data, the first node determines the target node from the plurality of second nodes based on the identifier that is of the target network data and that is carried in the first request message and the first correspondence.

In this embodiment of this application, before determining the target node, the first node determines whether the target network data is locally stored. If the target network data is locally stored, the first node may directly send the target network data to the accessed second node. If the target network data is not locally stored, the first node may determine the target node, and obtain, from the target node, the target network data needed by the accessed second node. This helps improve processing efficiency of a network device.

Optionally, before the first node receives the first request message, the method further includes: The third node sends configuration information of the third node to the first node, where the configuration information carries the routing data of the plurality of second nodes. Correspondingly, the first node receives the configuration information.

Optionally, before the first node receives the first request message, the method further includes: All or a part of the second nodes send dynamic registration information to the first node, where the dynamic registration information carries routing data of all or the part of the second nodes. Correspondingly, the first node receives the dynamic registration information.

It should be understood that all of the plurality of second nodes may send the dynamic registration information to the first node; or the part of the second nodes may send the dynamic registration information to the first node, and routing information of a remaining second node may be from the configuration information of the third node. This is not limited in this embodiment of this application. If all the second nodes send the dynamic registration information, the third node may not need to send the configuration information to the first node, thereby reducing signaling overheads of the third node. In addition, the second node performs dynamic registration, so that accuracy of the registration information can be ensured.

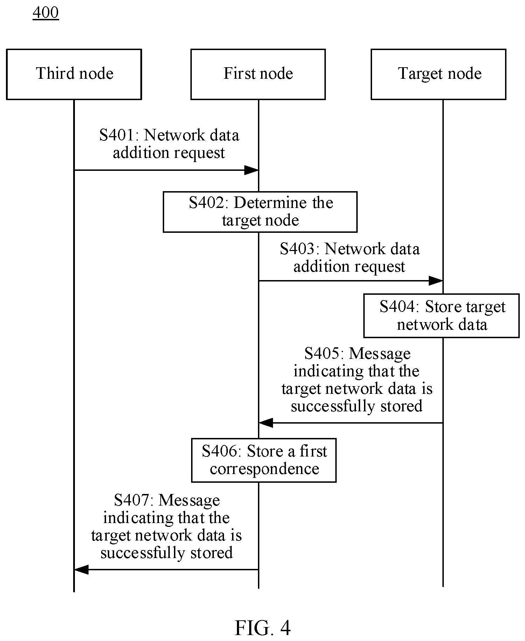

With reference to FIG. 4 to FIG. 6, the following describes the network data processing method when the first request message is from the third node.

FIG. 4 shows another network data processing method 400 according to an embodiment of this application. The method 400 is applied to the scenario 100 or the scenario 200, or may be applied to another scenario. This is not limited in this embodiment of this application. The method 400 includes the following steps.

S401: A third node sends a network data addition request to a first node, where the network data addition request carries an identifier of a target node and target network data to be added. Correspondingly, the first node receives the network data addition request.

It should be understood that the network data addition request may be understood as a request that is for performing the addition operation on the target network data and that is in the first request message.

S402: The first node determines the target node from a plurality of second nodes based on the network data addition request.

S403: The first node sends the network data addition request to the target node, where the network data addition request carries the target network data to be added. Correspondingly, the target node receives the network data addition request.

S404: The target node stores the target network data based on the network data addition request.

Specifically, the target node stores the target network data carried in the network data addition request.

S405: The target node sends, to the first node, a message indicating that the target network data is successfully stored. Correspondingly, the first node receives the message indicating that the target network data is successfully stored.

For example, the message indicating that the target network data is successfully stored may carry indication information 1 or an ACK, indicating that the target network data is successfully stored. To avoid repetition, details are not described herein again.

S406: The first node stores a first correspondence based on the message indicating that the target network data is successfully stored.

S407: The first node sends, to the third node, the message indicating that the target network data is successfully stored.

In a possible implementation, the target node may send, to the first node, the message indicating that the target network data is successfully stored, and then the first node sends, to the third node, the message indicating that the target network data is successfully stored. In another possible implementation, the target node may directly send, to the third node without using the first node, the message indicating that the target network data is successfully stored. To avoid repetition, details are not described herein again.

In this embodiment of this application, the target node may send, to the first node, the message indicating that the target network data is successfully stored, and the first node stores the first correspondence based on the message. This helps improve convenience of network data query, and improve user experience.

According to the network data processing method in this embodiment of this application, the first node determines the target node based on the first request message, and sends, to the target node, the message that is for performing the addition operation on the target network data and that is in the first request message. Because the first node in this embodiment of this application stores routing data of the plurality of second nodes, addition management of network data in the plurality of second nodes can be implemented by using the first node. This helps improve network data addition efficiency, reduce operation costs, and improve user experience.

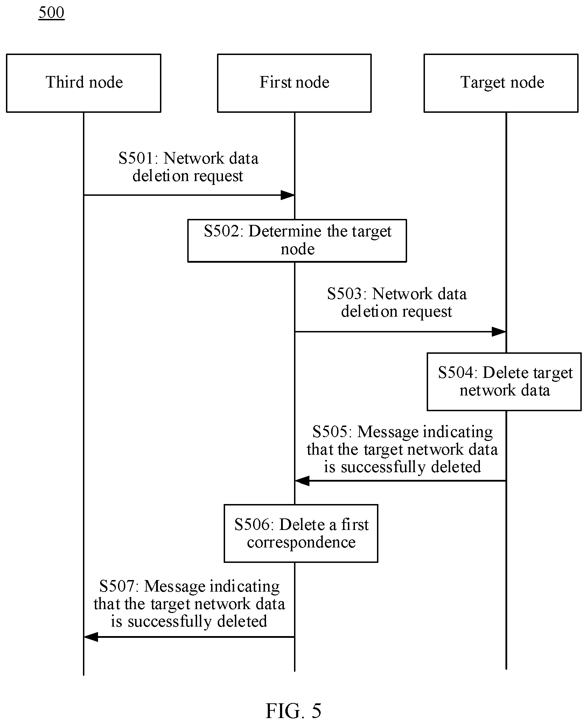

FIG. 5 shows another network data processing method 500 according to an embodiment of this application. The method 500 is applied to the scenario 100 or the scenario 200, or may be applied to another scenario. This is not limited in this embodiment of this application. The method 500 includes the following steps.

S501: A third node sends a network data deletion request to a first node, where the network data deletion request carries an identifier of target network data to be deleted. Correspondingly, the first node receives the network data deletion request.

It should be understood that the network data deletion request may be understood as a request that is for performing the deletion operation on the target network data and that is in the first request message.

S502: The first node determines a target node from a plurality of second nodes based on the network data deletion request.

Specifically, the first node determines the target node from the plurality of second nodes based on a first correspondence and the identifier that is of the target network data to be deleted and that is carried in the network data deletion request.

S503: The first node sends the network data deletion request to the target node, where the network data deletion request carries the identifier of the target network data to be deleted. Correspondingly, the target node receives the network data deletion request.

S504: The target node deletes the target network data based on the network data deletion request.

S505: The target node sends, to the first node, a message indicating that the target network data is successfully deleted. Correspondingly, the first node receives the message indicating that the target network data is successfully deleted.

For example, the message indicating that the target network data is successfully deleted may carry indication information 1 or an ACK, indicating that the target network data is successfully deleted. To avoid repetition, details are not described herein again.

S506: The first node deletes the first correspondence based on the message indicating that the target network data is successfully deleted.

S507: The first node sends, to the third node, the message indicating that the target network data is successfully deleted. Correspondingly, the third node receives the message indicating that the target network data is successfully deleted.

In a possible implementation, the target node may send, to the first node, the message indicating that the target network data is successfully deleted, and then the first node sends, to the third node, the message indicating that the target network data is successfully deleted. In another possible implementation, the target node may directly send, to the third node without using the first node, the message indicating that the target network data is successfully deleted. To avoid repetition, details are not described herein again.

In this embodiment of this application, the target node may send, to the first node, the message indicating that the target network data is successfully deleted, and the first node deletes the first correspondence based on the message. This helps improve accuracy of network data query, and improve user experience.

According to the network data processing method in this embodiment of this application, the first node determines the target node based on the first request message, and sends, to the target node, the message that is for performing the deletion operation on the target network data and that is in the first request message. Because the first node in this embodiment of this application stores routing data of the plurality of second nodes, deletion management of network data in the plurality of second nodes can be implemented by using the first node. This helps improve network data deletion efficiency, reduce operation costs, and improve user experience.

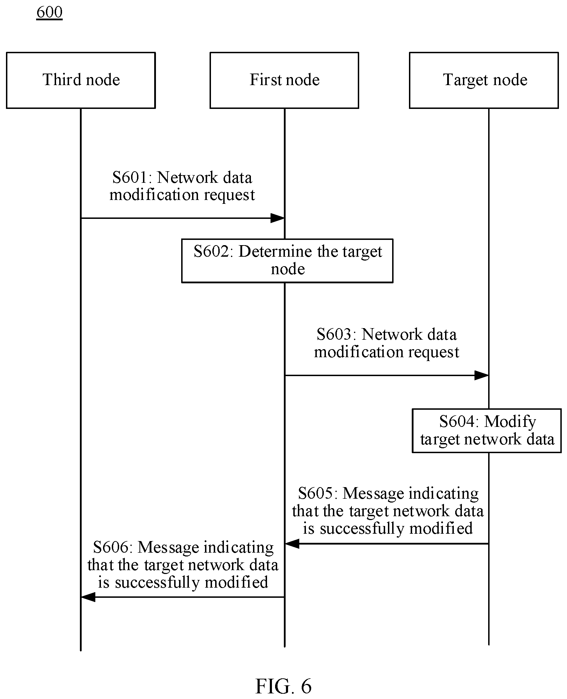

FIG. 6 shows another network data processing method 600 according to an embodiment of this application. The method 600 is applied to the scenario 100 or the scenario 200, or may be applied to another scenario. This is not limited in this embodiment of this application. The method 600 includes the following steps.

S601: A third node sends a network data modification request to a first node, where the network data modification request carries an identifier of target network data to be modified and modified target network data. Correspondingly, the first node receives the network data modification request.

It should be understood that the network data modification request may be understood as a request that is for performing the modification operation on the target network data and that is in the first request message.

S602: The first node determines a target node from a plurality of second nodes based on the network data modification request.

S603: The first node sends the network data modification request to the target node, where the network data modification request carries the identifier of the target network data to be modified and the modified target network data. Correspondingly, the target node receives the network data modification request.

S604: The target node modifies the target network data based on the network data modification request.

S605: The target node sends, to the first node, a message indicating that the target network data is successfully modified. Correspondingly, the first node receives the message indicating that the target network data is successfully modified.

For example, the message indicating that the target network data is successfully modified may carry indication information 1 or an ACK, indicating that the target network data is successfully modified. To avoid repetition, details are not described herein again.

S606: The first node sends, to the third node, the message indicating that the target network data is successfully modified. Correspondingly, the third node receives the message indicating that the target network data is successfully modified.

**In** a possible implementation, the target node may send, to the first node, the message indicating that the target network data is successfully modified, and then the first node sends, to the third node, the message indicating that the target network data is successfully modified. In another possible implementation, the target node may directly send, to the third node without using the first node, the message indicating that the target network data is successfully modified. To avoid repetition, details are not described herein again.

According to the network data processing method in this embodiment of this application, the first node determines the target node based on the first request message, and sends, to the target node, the message that is for performing the modification operation on the target network data and that is in the first request message. Because the first node in this embodiment of this application stores routing data of the plurality of second nodes, modification management of network data in the plurality of second nodes can be implemented by using the first node. This helps improve network data modification efficiency, reduce operation costs, and improve user experience.

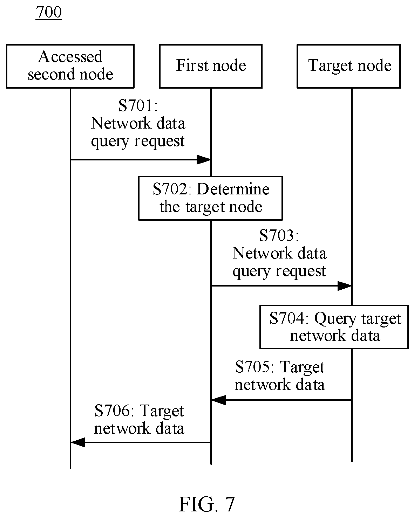

With reference to FIG. 7, the following describes the network data processing method when the first request message is from the one accessed second node in the plurality of second nodes.

FIG. 7 shows another network data processing method 700 according to an embodiment of this application. The method 700 is applied to the scenario 100 or the scenario 200, or may be applied to another scenario. This is not limited in this embodiment of this application. The method 700 includes the following steps.

S701: An accessed second node sends a network data query request to a first node, where the network data query request carries an identifier of target network data. Correspondingly, the first node receives the network data query request.

It should be understood that the network data query request may be understood as a request that is for performing the query operation on the target network data and that is in the first request message.

S702: The first node determines a target node from a plurality of second nodes based on the network data query request.

S703: The first node sends the network data query request to the target node, where the network data query request carries the identifier of the target network data. Correspondingly, the target node receives the network data query request.

S704: The target node queries the target network data based on the network data query request.

S705: When the target network data is successfully queried, the target node sends the target network data to the first node. Correspondingly, the first node receives the target network data.

S706: The first node sends the target network data to the third node. Correspondingly, the third node receives the target network data.

When the target network data is successfully queried, in a possible implementation, the target node may send the target network data to the first node, and then the first node sends the target network data to the accessed second node. In another possible implementation, the target node may directly send the target network data to the accessed second node without using the first node. To avoid repetition, details are not described herein again.

According to the network data processing method in this embodiment of this application, because the first node stores routing data of the plurality of second nodes, the first node may determine the target node in which the target network data is located, and query the target network data. This helps improve network data query efficiency and reduce operation costs. In addition, when the accessed second node has no target network data, the first node can query the target network data in the target node, to implement network data sharing between the plurality of second nodes, and improve user experience.

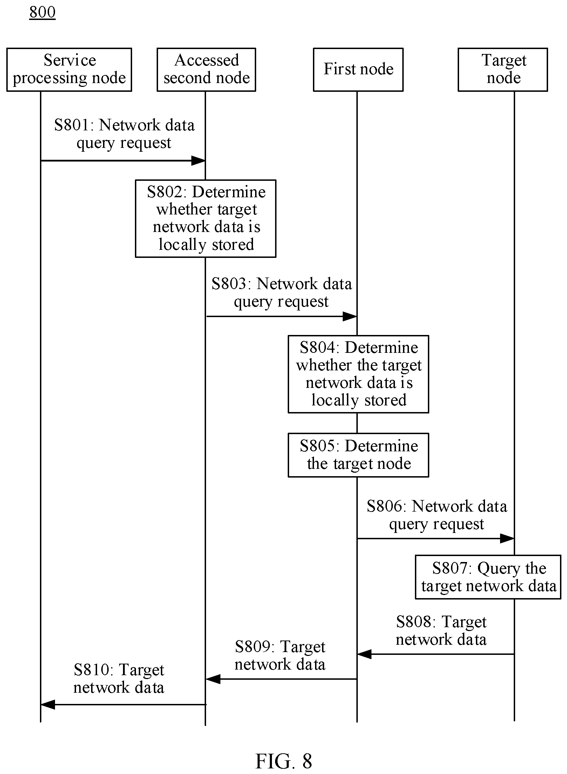

With reference to FIG. 8, the following describes the network data processing method by using an example in which a third request message is used to request to perform a query operation on target network data.

FIG. 8 shows another network data processing method 800 according to an embodiment of this application. The method 800 is applied to the scenario 100 or the scenario 200, or may be applied to another scenario. This is not limited in this embodiment of this application. The method 800 includes the following steps.

S801: A service processing node sends a network data query request to an accessed second node, where the network data query request carries an identifier of target network data. Correspondingly, the accessed second node receives the network data query request.

S802: The accessed second node determines, based on the identifier that is of the target network data and that is carried in the network data query request, whether the target network data is locally stored.

S803: If the accessed second node does not locally store the target network data, the accessed second node sends the network data query request to a first node, where the network data query request carries the identifier of the target network data. Correspondingly, the first node receives the network data query request.

S804: The first node determines, based on the identifier that is of the target network data and that is carried in the network data query request, whether the target network data is locally stored.

S805: If the first node does not locally store the target network data, the first node determines a target node from a plurality of second nodes based on a first correspondence and the identifier that is of the target network data and that is carried in a network data query request message.

S806: The first node sends the network data query request to the target node, where the network data query request carries the identifier of the target network data. Correspondingly, the target node receives the network data query request.

S807: The target node queries the target network data based on the identifier that is of the target network data and that is carried in the network data query request.

S808: When the target network data is successfully queried, the target node sends the target network data to the first node. Correspondingly, the first node receives the target network data.

S809: The first node sends the target network data to the accessed second node. Correspondingly, the accessed second node receives the target network data.

S810: The accessed second node sends the target network data to the service processing node. Correspondingly, the service processing node receives the target network data.

When the target network data is successfully queried, in a possible implementation, the target node may send the target network data to the first node, and then the first node sends the target network data to the accessed second node. In another possible implementation, the target node may directly send the target network data to the accessed second node without using the first node. To avoid repetition, details are not described herein again.

It should be understood that sequence numbers of the foregoing processes do not mean execution sequences. The execution sequences of the processes should be determined based on functions and internal logic of the processes, and should not be construed as any limitation on implementation processes of embodiments of this application.

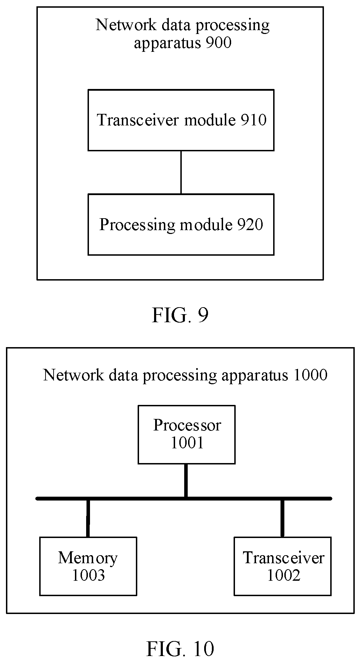

The foregoing describes in detail the network data processing method in embodiments of this application with reference to FIG. 3 to FIG. 8. The following describes in detail a network data processing apparatus in embodiments of this application with reference to FIG. 9 and FIG. 10.

FIG. 9 shows a network data processing apparatus 900 according to an embodiment of this application. The apparatus 900 includes a transceiver module 901 and a processing module 902.

In a possible implementation, the apparatus 900 is configured to implement steps corresponding to the first node in the foregoing embodiments.

The transceiver module 901 is configured to receive a first request message, where the first request message is used to request to perform an addition operation, a deletion operation, a modification operation, or a query operation on target network data. The processing module 902 is configured to determine a target node from a plurality of second nodes based on the first request message, where the target node is a storage node corresponding to the target network data. The transceiver module 901 is further configured to: send a second request message to the target node based on routing data, where the second request message is used to request to perform the operation in the first request message on the target network data; and receive a response message from the target node.

Optionally, the first request message is from a third node, and the third node is configured to manage the network data.

Optionally, the first request message is used to request to perform the addition operation on the target network data, and the first request message carries an identifier of the target node and the target network data. The processing module 902 is further configured to store a first correspondence, where the first correspondence indicates a correspondence between the identifier of the target node and an identifier of the target network data.

Optionally, the first request message is used to request to perform the deletion operation on the target network data, and the first request message carries an identifier of the target network data. The processing module 902 is further configured to delete a first correspondence, where the first correspondence indicates a correspondence between an identifier of the target node and the identifier of the target network data.

Optionally, the first request message is used to request to perform the modification operation on the target network data, and the first request message carries an identifier of the target network data and modified target network data.

Optionally, the first request message is from one accessed second node in the plurality of second nodes, the first request message is used to request to perform the query operation on the target network data, the first request message carries an identifier of the target network data, and the response message carries the target network data.

Optionally, the network data processing apparatus further stores network data. The processing module 902 is further configured to: determine, based on the identifier of the target network data, whether the network data processing apparatus locally stores the target network data; and when the network data processing apparatus does not locally store the target network data, determine the target node from the plurality of second nodes based on the first request message.

Optionally, the transceiver module 901 is further configured to receive configuration information from the third node, where the third node is configured to manage the network data, and the configuration information carries the routing data of the plurality of second nodes.

Optionally, the transceiver module 901 is further configured to receive dynamic registration information from all or a part of the plurality of second nodes, where the dynamic registration information carries routing data of all or the part of the second nodes.

In another possible implementation, the apparatus 900 is configured to implement steps corresponding to the target node in the foregoing embodiments.

The transceiver module 901 is configured to receive a second request message from a first node, where the second request message is used to request to perform an addition operation, a deletion operation, a modification operation, or a query operation on target network data. The processing module 902 is configured to perform the operation in the second request message on the target network data based on the second request message. The transceiver module 901 is further configured to send a response message to the first node.

In still another possible implementation, the apparatus 900 is configured to implement steps corresponding to the accessed node in the foregoing embodiments.

The transceiver module 901 is configured to receive a third request message from a service processing node, where the third request message is used to request to perform an addition operation, a deletion operation, a modification operation, or a query operation on target network data. The processing module 902 is configured to determine, based on the third request message, whether the network data processing apparatus locally stores the target network data. The transceiver module 901 is further configured to: when the network data processing apparatus does not locally store the target network data, send a first request message to a first node, where the first request message is used to request to perform the operation in the third request message on the target network data.

It should be understood that the apparatus 900 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function. In an optional example, a person skilled in the art may understand that the apparatus 900 may be specifically any one of the first node, the target node, or the accessed node in the foregoing embodiments, the apparatus 900 may be configured to perform procedures and/or steps corresponding to the first node, the target node, or the accessed node in the foregoing method embodiments. To avoid repetition, details are not described herein again.

The foregoing apparatus 900 has a function of implementing corresponding steps performed by the first node, the target node, or the accessed node in the foregoing method. The function may be implemented by hardware, or may be implemented by hardware executing corresponding software. The hardware or the software includes one or more modules corresponding to the function. For example, the transceiver module 901 may include a sending module and a receiving module. The sending module may be configured to implement steps and/or procedures that correspond to the transceiver module and that are used to perform a sending action, and the receiving module may be configured to implement steps and/or procedures that correspond to the transceiver module and that are used to perform a receiving action. The sending module may be replaced by a transmitter, and the receiving module may be replaced by a receiver, to respectively perform sending and receiving operations and related processing operations in the method embodiments.

In this embodiment of this application, the apparatus 900 in FIG. 9 may alternatively be a chip or a chip system, for example, a system on chip (system on chip, SoC). Correspondingly, the transceiver module 901 may be a transceiver circuit of the chip. This is not limited herein.

FIG. 10 shows another network data processing apparatus 1000 according to an embodiment of this application. The apparatus 1000 includes a processor 1001, a transceiver 1002, and a memory 1003. The processor 1001, the transceiver 1002, and the memory 1003 communicate with each other through an internal connection path. The memory 1003 is configured to store instructions. The processor 1001 is configured to execute the instructions stored in the memory 1003, to control the transceiver 1002 to send a signal and/or receive a signal.

It should be understood that the apparatus 1000 may be specifically any one of the first node, the target node, or the accessed node in the foregoing embodiments, and may be configured to perform steps and/or procedures corresponding to any one of the first node, the target node, or the accessed node in the foregoing method embodiments. Optionally, the memory 1003 may include a read-only memory and a random access memory, and provide instructions and data for the processor. A part of the memory may further include a non-volatile random access memory. For example, the memory may further store information of a device type. The processor 1001 may be configured to execute the instructions stored in the memory, and when the processor 1001 executes the instructions stored in the memory, the processor 1001 is configured to perform the steps and/or the procedures corresponding to any one of the first node, the target node, or the accessed node in the foregoing method embodiments. The transceiver 1002 may include a transmitter and a receiver. The transmitter may be configured to implement steps and/or procedures that correspond to the transceiver and that are used to perform a sending action. The receiver may be configured to implement steps and/or procedures that correspond to the transceiver and that are used to perform a receiving action.

It should be understood that in this embodiment of this application, the processor may be a central processing unit (central processing unit, CPU), or the processor may be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, steps in the foregoing method can be implemented by using a hardware integrated logical circuit in the processor, or by using instructions in a form of software. The steps of the method disclosed with reference to embodiments of this application may be directly performed by a hardware processor, or may be performed by using a combination of hardware and a software module in the processor. The software module may be located in a mature storage medium in the art, such as a random access memory, a flash memory, a read-only memory, a programmable read-only memory, an electrically erasable programmable memory, or a register. The storage medium is located in the memory, and the processor reads the instructions in the memory and completes the steps in the foregoing method in combination with hardware of the processor. To avoid repetition, details are not described herein again.

This application further provides a computer-readable storage medium. The computer-readable storage medium is configured to store a computer program, and the computer program is used to implement the method corresponding to any one of the first node, the target node, or the accessed node in the foregoing embodiments.

This application further provides a computer program product. The computer program product includes a computer program (which may also be referred to as code or instructions). When the computer program runs on a computer, the computer may perform the method corresponding to any one of the first node, the target node, or the accessed node in the foregoing embodiments.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, may be located in one position, or may be distributed on a plurality of network modules. Some or all the modules may be selected based on actual needs to achieve the objectives of the solutions of embodiments.

In addition, functional modules in embodiments of this application may be integrated into one processing module, or each module may exist alone physically, or two or more modules may be integrated into one module.

When the functions are implemented in a form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the method in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A network data processing method, applied to a system comprising a first node and a plurality of second nodes, wherein the first node stores routing data of the plurality of second nodes, the plurality of second nodes store network data, and the method comprises:
receiving, by the first node, a first request message, wherein the first request message is used to request to perform an addition operation, a deletion operation, a modification operation, or a query operation on target network data;
determining, by the first node, a target node from the plurality of second nodes based on the first request message, wherein the target node is a storage node corresponding to the target network data;
sending, by the first node, a second request message to the target node based on the routing data, wherein the second request message is used to request to perform the operation in the first request message on the target network data; and
receiving, by the first node, a response message from the target node.

2. The method according to claim 1, wherein the system further comprises a third node, the third node is configured to manage the network data, and the first request message is from the third node.

3. The method according to claim 2, wherein the first request message is used to request to perform the addition operation on the target network data, and the first request message carries an identifier of the target node and the target network data; and
after the receiving, by the first node, a response message from the target node, the method further comprises:
storing, by the first node, a first correspondence, wherein the first correspondence indicates a correspondence between the identifier of the target node and an identifier of the target network data.

4. The method according to claim 2, wherein the first request message is used to request to perform the deletion operation on the target network data, and the first request message carries an identifier of the target network data; and
after the receiving, by the first node, a response message from the target node, the method further comprises:
deleting, by the first node, a first correspondence, wherein the first correspondence indicates a correspondence between an identifier of the target node and the identifier of the target network data.

5. The method according to claim 2, wherein the first request message is used to request to perform the modification operation on the target network data, and the first request message carries an identifier of the target network data and modified target network data.

6. The method according to claim 1, wherein the first request message is from one accessed second node in the plurality of second nodes, the first request message is used to request to perform the query operation on the target network data, the first request message carries an identifier of the target network data, and the response message carries the target network data.

7. The method according to claim 6, wherein the first node further stores the network data;
before the determining, by the first node, a target node from the plurality of second nodes based on the first request message, the method further comprises:
determining, by the first node based on the identifier of the target network data, whether the first node locally stores the target network data; and
the determining, by the first node, a target node from the plurality of second nodes based on the first request message comprises:
when the first node does not locally store the target network data, determining, by the first node, the target node from the plurality of second nodes based on the first request message.

8. The method according to any one of claims 1 to 7, wherein the system further comprises the third node, and the third node is configured to manage the network data; and
before the receiving, by the first node, a first request message, the method further comprises:
receiving, by the first node, configuration information from the third node, wherein the configuration information carries the routing data of the plurality of second nodes.

9. The method according to any one of claims 1 to 8, wherein before the receiving, by the first node, a first request message, the method further comprises:
receiving, by the first node, dynamic registration information from all or a part of the plurality of second nodes, wherein the dynamic registration information carries routing data of all or the part of the second nodes.

10. A network data processing method, applied to a system comprising a first node and a plurality of second nodes, wherein the first node stores routing data of the plurality of second nodes, the plurality of second nodes store network data, and the method comprises:
receiving, by a target node in the plurality of second nodes, a second request message from the first node, wherein the second request message is used to request to perform an addition operation, a deletion operation, a modification operation, or a query operation on target network data;
performing, by the target node, the operation in the second request message on the target network data based on the second request message; and
sending, by the target node, a response message to the first node.

11. A network data processing method, applied to a system comprising a first node and a plurality of second nodes, wherein the first node stores routing data of the plurality of second nodes, the plurality of second nodes store network data, and the method comprises:
receiving, by an accessed node in the plurality of second nodes, a third request message from a service processing node, wherein the third request message is used to request to perform an addition operation, a deletion operation, a modification operation, or a query operation on target network data;
determining, by the accessed node based on the third request message, whether the accessed node locally stores the target network data; and
when the accessed node does not locally store the target network data, sending, by the accessed node, a first request message to the first node, wherein the first request message is used to request to perform the operation in the third request message on the target network data.

12. A network data processing apparatus, comprising:
a transceiver module, configured to receive a first request message, wherein the first request message is used to request to perform an addition operation, a deletion operation, a modification operation, or a query operation on target network data; and
a processing module, configured to determine a target node from a plurality of second nodes based on the first request message, wherein the target node is a storage node corresponding to the target network data, wherein
the transceiver module is further configured to:
send a second request message to the target node based on routing data, wherein the second request message is used to request to perform the operation in the first request message on the target network data; and receive a response message from the target node.

13. The processing apparatus according to claim 12, wherein the first request message is from a third node, and the third node is configured to manage the network data.

14. The processing apparatus according to claim 13, wherein the first request message is used to request to perform the addition operation on the target network data, and the first request message carries an identifier of the target node and the target network data; and
the processing module is further configured to:
store a first correspondence, wherein the first correspondence indicates a correspondence between the identifier of the target node and an identifier of the target network data.

15. The processing apparatus according to claim 13, wherein the first request message is used to request to perform the deletion operation on the target network data, and the first request message carries an identifier of the target network data; and
the processing module is further configured to:
delete a first correspondence, wherein the first correspondence indicates a correspondence between an identifier of the target node and the identifier of the target network data.

16. The processing apparatus according to claim 13, wherein the first request message is used to request to perform the modification operation on the target network data, and the first request message carries an identifier of the target network data and modified target network data.

17. The processing apparatus according to claim 12, wherein the first request message is from one accessed second node in the plurality of second nodes, the first request message is used to request to perform the query operation on the target network data, the first request message carries an identifier of the target network data, and the response message carries the target network data.

18. The processing apparatus according to claim 17, wherein the processing apparatus further stores network data; and
the processing module is further configured to:
determine, based on the identifier of the target network data, whether the processing apparatus locally stores the target network data; and
when the processing apparatus does not locally store the target network data, determine the target node from the plurality of second nodes based on the first request message.

19. The processing apparatus according to any one of claims 12 to 18, wherein the transceiver module is further configured to:
receive configuration information from the third node, wherein the third node is configured to manage the network data, and the configuration information carries the routing data of the plurality of second nodes.

20. The processing apparatus according to any one of claims 12 to 19, wherein the transceiver module is further configured to:
receive dynamic registration information from all or a part of the plurality of second nodes, wherein the dynamic registration information carries routing data of all or the part of the second nodes.

21. A network data processing apparatus, comprising:
a transceiver module, configured to receive a second request message from a first node, wherein the second request message is used to request to perform an addition operation, a deletion operation, a modification operation, or a query operation on target network data; and
a processing module, configured to perform the operation in the second request message on the target network data based on the second request message, wherein
the transceiver module is further configured to send a response message to the first node.

22. A network data processing apparatus, comprising:
a transceiver module, configured to receive a third request message from a service processing node, wherein the third request message is used to request to perform an addition operation, a deletion operation, a modification operation, or a query operation on target network data; and
a processing module, configured to determine, based on the third request message, whether the processing apparatus locally stores the target network data, wherein
the transceiver module is further configured to: when the processing apparatus does not locally store the target network data, send a first request message to a first node, wherein the first request message is used to request to perform the operation in the third request message on the target network data.

23. A network data processing apparatus, comprising a processor, wherein the processor is coupled to a memory, the memory is configured to store a computer program; and when the processor invokes the computer program, the processing apparatus is enabled to perform the method according to any one of claims 1 to 11.

24. A computer-readable storage medium, configured to store a computer program, wherein the computer program comprises instructions used to implement the method according to any one of claims 1 to 11.

25. A computer program product, wherein the computer program product comprises computer program code; and when the computer program code is run on a computer, the computer is enabled to implement the method according to any one of claims 1 to 11.
